# EUROPÄISCHE PATENTANMELDUNG

(11) **EP 3 591 426 A1**
(43) Veröffentlichungstag der Anmeldung: **08.01.2020**
(21) Anmeldenummer: 19181910.1
(22) Anmeldetag: 24.06.2019
(51) Int. Cl.: G01S 7/491, G01S 17/88

(54) **3D-SENSOR UND VERFAHREN ZUM ÜBERWACHEN EINES ÜBERWACHUNGSBEREICHS**

(30) Priorität: 06.07.2018 DE 102018116371
(71) Anmelder: Sick AG, 79183 Waldkirch (DE)
(72) Erfinder: Hornung, Armin, 79312 Emmendingen (DE); Neubauer, Matthias, 79102 Freiburg (DE); Müller, Lars, 79108 Freiburg (DE)

(57) **Zusammenfassung**

Es wird ein 3D-Sensor (10) zum Überwachen eines Überwachungsbereichs (12) angegeben, wobei der 3D-Sensor (10) mindestens einen Lichtempfänger (16a-b) zum Erzeugen eines Empfangssignals aus Empfangslicht aus dem Überwachungsbereich (12) sowie eine Steuer- und Auswertungseinheit (24) mit einem Speicher aufweist, die dafür ausgebildet ist, durch Auswerten des Empfangssignals Objekte (28) in dem Überwachungsbereich (12) zu erfassen und den kürzesten Abstand der erfassten Objekte (28) zu mindestens einem Bezugsvolumen (26a, 26b) zu bestimmen und für die Bestimmung des jeweiligen kürzesten Abstands eines erfassten Objekts (28) mindestens einen vorausberechneten Abstand zu dem Bezugsvolumen (26a, 26b) aus einem Speicher zu lesen.

## Beschreibung

Die Erfindung betrifft einen 3D-Sensor, insbesondere eine 3D-Kamera, und ein Verfahren zum Überwachen eines Überwachungsbereichs nach dem Oberbegriff von Anspruch 1 beziehungsweise 14.

3D-Sensoren nehmen Bilder auf, die in ihren Pixeln einen Abstandswert enthalten. Diese tiefenaufgelösten oder dreidimensionalen Bilddaten werden auch als Tiefenkarte bezeichnet. Der im Vergleich zu einer zweidimensionalen Bilderfassung höhere Geräte- und Auswertungsaufwand wird in vielen Anwendungen durch die Zusatzinformationen gerechtfertigt. Zu den 3D-Sensoren zählen 3D-Kameras in unterschiedlichen Technologien, beispielsweise Stereoskopie, Triangulation, Lichtlaufzeit, mit Auswertung der Störung passiver zweidimensionaler Muster oder von projizierten Beleuchtungsmustern. Weiterhin bekannt sind in zwei oder allen drei Richtungen abtastende Laserscanner, die über die jeweiligen Abtastwinkel und die gemessene Entfernung ebenfalls dreidimensionale Bilddaten erfassen.

Ein besonderes Anwendungsgebiet ist die Sicherheitstechnik mit dem primären Ziel, Personen vor Gefahrenquellen zu schützen, wie sie beispielsweise Maschinen im industriellen Umfeld darstellen. Die Maschine wird mit Hilfe des 3D-Sensors überwacht, und wenn demnach eine Situation vorliegt, in der eine Person gefährlich nahe an die Maschine zu gelangen droht, wird eine geeignete Absicherungsmaßnahme ergriffen.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile.

Das gängige Absicherungskonzept sieht vor, dass Schutzfelder konfiguriert werden, die während des Betriebs der Maschine vom Bedienpersonal nicht betreten werden dürfen. Erkennt der Sensor einen unzulässigen Schutzfeldeingriff, etwa ein Bein einer Bedienperson, so löst er einen sicherheitsgerichteten Halt der Maschine aus.

In der sicherheitstechnischen Überwachung von Robotern besteht ein zunehmender Wunsch nach engerer Zusammenarbeit mit Personen (MRK, Mensch-Roboter-Kollaboration). Relevante Normen in diesem Zusammenhang sind beispielsweise die ISO 10218 für Industrieroboter oder die ISO 15066 für kollaborierende Roboter. In der MRK sollten Schutzfelder und Sicherheitsabstände möglichst klein und eventuell sogar situationsangepasst konfiguriert werden, natürlich unter der Vorgabe, dass die Sicherheit gewährleistet bleibt. Die Normen ISO13854, ISO 13855, ISO 13857 befassen sich mit der Festlegung von Sicherheitsabständen.

Eine Bewertung von Objekten und Maschinen bezüglich Geschwindigkeit und gegenseitiger Entfernung wird in den genannten Roboternormen als "Speed and Separation Monitoring" bezeichnet. Sichere überwachende Sensoren, wie Laserscanner oder 3D-Kameras, unterstützen das aber nicht. Sie arbeiten weiterhin mit den üblichen Schutzfeldern, und sie liefern nur ein binäres Abschaltsignal, ob ein Schutzfeld verletzt ist oder nicht. Zwar ist die Sicherheit auf diese Weise gewährleistet, aber nicht besonders flexibel und auch häufig mit unnötigen Sicherheitszuschlägen und damit Einschränkungen der Verfügbarkeit, da die Schutzfelder für worst-case-Szenarien und nicht die tatsächliche aktuelle Situation konfiguriert sind.

Für ein Sicherheitskonzept auf Basis kürzester Abstände zwischen Objekt und Maschine muss eine Vielzahl von Abständen im dreidimensionalen Raum berechnet werden. Eine exakte Berechnung zur Laufzeit bedeutet einen sehr hohen Rechenaufwand, der bei den erforderlichen Auflösungen und Ansprechzeiten nur mit extremen Rechenressourcen zu leisten ist. Der Aufwand lässt sich verringern, wenn Objekte und Maschinen mit einfachen geometrischen Modellen dargestellt werden, was aber zwangsläufig eine zusätzliche Unterschätzung der Abstände mit sich bringt, da die Modelle zu großzügige Umhüllungen bilden. Dadurch wird unnötig auf scheinbare Gefahrensituationen reagiert, die sich bei exakter Berechnung als unkritisch erwiesen hätten.

G. Borgefors, "Distance transformations in digital images." Computer vision, graphics, and image processing 34.3 (1986), S. 344-371 befasst sich mit Distanztransformationen, die aus einem digitalen Bild mit Bildmerkmalspixeln und sonstigen Pixeln ein Grauwertbild erzeugen, dessen Werte jeweils den Abstand zu dem nächsten Bildmerkmalspixel codieren.

D. G. Bailey, "An efficient euclidean distance transform." International workshop on combinatorial image analysis. Springer, Berlin, Heidelberg, 2004, S. 394-408 beschreibt einen effizienten Algorithmus für eine Distanztransformation mit exakten euklidischen Distanzen.

T. Schouten et al. "Fast exact Euclidean distance (FEED) transformation." Pattern Recognition, 2004. ICPR 2004. Proceedings of the 17th International Conference on. Vol. 3. IEEE, 2004 stellt einen weiteren Ansatz vor, um den Aufwand für eine Distanztransformation zu begrenzen. Eine der Maßnahmen ist die Vorausberechnung der euklidischen Distanzen zwischen Pixelpositionen.

Alle diese Arbeiten beschränken sich jedoch auf den zweidimensionalen Fall und haben auch nichts mit den erläuterten Sicherheitsanwendungen zu tun. Außerdem wird jeweils nur ein punktueller Abstand von einem einzelnen Pixel zu dem Bildmerkmal berechnet, nicht der Abstand zwischen zwei flächigen oder gar räumlichen Bereichen.

In der US2007/156372 A1 werden Pfade in einem Lagerhaus geplant. Das Lagerhaus wird in Zonen mit einem Eingangs- und Ausgangspunkt unterteilt. Das Problem wird dann in eine Pfadsuche innerhalb der Startzone zu dem Ausgangspunkt, von der Startzone zu der Zielzone und innerhalb der Zielzone ab dem Eingangspunkt unterteilt. Die jeweiligen kürzesten Pfade von einer Zone zur anderen können vorausberechnet und in einer Tabelle abgelegt sein. Der für eine Überwachung benötigte kürzeste Abstand folgt aber keinem Pfad, sondern entspricht einer direkten Verbindung. Außerdem ist das Pfadfinderproblem der US 2007/156372 A1 wiederum zweidimensional.

Es ist daher Aufgabe der Erfindung, eine verbesserte Abstandsbestimmung für eine dreidimensionale Überwachung anzugeben.

Diese Aufgabe wird durch einen 3D-Sensor und ein Verfahren zum Überwachen eines Überwachungsbereichs nach Anspruch 1 beziehungsweise 14 gelöst. Mit einem Lichtempfänger wird Empfangslicht aus dem Überwachungsbereich erfasst und daraus ein Empfangssignal gewonnen. Die Ausgestaltung des Lichtempfängers und damit die Art des Empfangssignals hängen von dem 3D-Sensor ab. Beispielsweise ist der Lichtempfänger ein Bildsensor oder ein Paar von Bildsensoren, und die aus den Pixeln ausgelesenen Informationen werden summarisch als Empfangssignal bezeichnet. Das Empfangssignal wird in dem 3D-Sensor ausgewertet, um Objekte zu erfassen, etwa als 3D-Punktewolke oder vorzugsweise in einer Detektionskarte, d. h. einem zweidimensionalen Bild, in dessen Pixel jeweils dort Einträge vorgenommen werden, wo ein relevantes Objekt erfasst ist. Es wird dann ein kürzester Abstand von den erfassten Objekten zu mindestens einem Bezugsvolumen bestimmt. Das Bezugsvolumen ist ein Teilbereich des Überwachungsbereichs und virtuell, jedoch mit Bezug zur realen Szenerie festgelegt, und es kommt dem Bezugsvolumen je nach Anwendung eine bestimmte Bedeutung zu, etwa dass sich dort eine abzusichernde Maschine befindet oder ein erfasstes Objekt in diesem Raumbereich eine bestimmte Reaktion auslösen soll.

Die Erfindung geht von dem Grundgedanken aus, die Abstandsberechnung zur Laufzeit durch Vorausberechnungen zu entlasten. Dazu ist ein Speicher vorgesehen, in dem vorausberechnete Abstände abgelegt werden, insbesondere als Nachschlagtabelle (LUT, Lookup Table). Im Betrieb werden die vorausberechneten Abstände eingelesen oder nachgeschlagen und entweder direkt als kürzeste Abstände von den erfassten Objekten zu mindestens einem Bezugsvolumen oder als Grundlage für eine weitere Abstandsbestimmung genutzt.

Die Erfindung hat den Vorteil, dass eine effiziente Berechnung von Abständen im Raum auch unter Berücksichtigung von Verdeckungen aus der Zentralperspektive des 3D-Sensors ermöglicht wird. Dadurch werden höhere Auflösungen und kurze Ansprechzeiten auch bei moderaten Hardwareanforderungen realisierbar. Der Aufwand für eine Abstandsberechnung zu einem Bezugsvolumen im Raum skaliert mit der geometrischen Komplexität des Bezugsvolumens. Dieser Aufwand fällt aber erfindungsgemäß nicht mehr zur Laufzeit an, sondern davor. Dadurch werden praktisch beliebige Bezugsvolumina ohne Beschränkung auf einfache Modellierung möglich, da erfindungsgemäß die Berechnungen zur Laufzeit nahezu unabhängig von der konkreten Geometrie des Bezugsvolumens sind.

Der 3D-Sensor ist vorzugsweise eine 3D-Kamera. Eine 3D-Kamera kann jede bekannte Technik verwenden, wie ein Triangulationsprinzip, bei dem zwei Kamerabilder einer bewegten Kamera oder einer Stereokamera untereinander beziehungsweise ein Kamerabild mit einem bekannten Projektionsmuster korreliert und Disparitäten geschätzt werden, oder ein Lichtlaufzeitprinzip mit direkter Laufzeitmessung von Lichtsignalen oder Phasenmessung. Auch ein Laserscanner erzeugt 3D-Punktwolken, die bei einem klassischen Laserscanner auf eine Abtastebene beschränkt sind. Durch Veränderung der Abtastebene, also auch in Elevation bewegte Abtastung oder mehrere in Elevation versetzte Abtaststrahlen entfällt diese Beschränkung bei einem Laserscanner. Die erfindungsgemäße Abstandsbestimmung lässt sich auch für andere dreidimensionale Sensordaten etwa eines Radars oder Ultraschallsensors verwenden.

Vorzugsweise ist der 3D-Sensor für den Einsatz im Personenschutz vor einer gefahrbringenden Maschine sicher ausgebildet und erfüllt dafür die einleitend genannten oder entsprechende Normen, um eine gefahrbringende Maschine abzusichern.

Das Bezugsvolumen ist vorzugsweise eine Gefahrenstelle, welche eine Maschine absichert. Eine Gefahrenstelle ist eine Modellierung der Maschine und ihrer Arbeitsbewegungen zu deren Absicherung. Die Gefahrenstelle umfasst die Maschine selbst, Teilbereiche davon wie Werkzeugspitzen oder den beweglichen Teil eines Roboterarms und/oder sonstige Bereiche wie Zugangswege. Eine einfache Geometrie der Gefahrenstelle vereinfacht die Abstandsberechnung auf Kosten der Verfügbarkeit, und erfindungsgemäß kann der Aufwand für komplexe Geometrien bereits vorab geleistet werden. Gefahrenstellen werden bei der Planung der Sicherheitsanwendung konfiguriert, unter Umständen auch voll- oder halbautomatisch anhand des vorgesehenen Bewegungsablaufs der Maschine.

Erfasste Objekte in einer Gefahrenstelle werden bevorzugt ignoriert, beziehungsweise die Gefahrenstelle wird bei der Detektion ausmaskiert. Die Gefahrenstelle selbst wird also stets als frei von zu erfassenden Objekten angesehen, oder vielmehr als durch die Maschine blockiert. Tatsächlich wäre im Bezugsvolumen der Gefahrenstelle durchaus Raum für solche Objekte. Auch bildet die Maschine natürlich selbst ein Objekt, das zunächst von dem 3D-Sensor erfasst wird. Dies zu ignorieren vereinfacht die Überwachung und die Bestimmung kürzester Abstände, denn die Dynamik der Maschine innerhalb der Gefahrenstelle spielt so keine Rolle. Sicherheitstechnisch ist dies auch unproblematisch, denn jedes Objekt wird rechtzeitig erkannt, wenn es sich der Gefahrenstelle nähert.

Der 3D-Sensor weist vorzugsweise eine sichere Schnittstelle zur Ausgabe kürzester Abstände aus. Herkömmlich ist eine solche sichere Schnittstelle eines in der Sicherheitstechnik eingesetzten Sensors eine binäre Schnittstelle, über die ein binäres Signal ausgegeben wird, ob eine Schutzfeldverletzung vorliegt (OSSD, Output Signal Switching Device). Stattdessen wird nun der jeweils aktuelle kürzeste Abstand sicher für eine angeschlossene Steuerung zur Verfügung gestellt. Diese Steuerung, etwa die übergeordnete Steuerung einer Roboterzelle oder auch die Steuerung der Maschine beziehungsweise des Roboters selbst, kann anhand des kürzesten Abstands sehr einfach feststellen, ob eine Gefahr besteht, und übernimmt die eigentliche Absicherungsfunktion selbst. Alternativ erfolgt die Sicherheitsbewertung schon in dem 3D-Sensors.

Der 3D-Sensor ist bevorzugt für ein Detektionsvermögen ausgelegt, bei dem Objekte ab einer Mindestgröße sicher erfasst werden, wobei für die Bestimmung des kürzesten Abstands nur Objekte der Mindestgröße berücksichtigt sind. Das Detektionsvermögen ist eine in den einschlägigen Normen spezifizierte Eignung eines sicheren Sensors, Objekte einer Mindestgröße im gesamten Überwachungsbereich sicher zu erfassen. Die entsprechende Auslegung des Sensors betrifft seinen Aufbau, also seine Optik, seinen Lichtempfänger und weitere mögliche, noch nicht genannte Komponenten wie etwa eine Beleuchtung, und die sichere Auswertung. Das Detektionsvermögen schließt erst einmal nicht aus, dass auch kleinere Objekte erfasst werden. Für Objekte, die kleiner sind als die Mindestgröße, ist aber der Schutz nicht garantiert, beispielsweise wird ein Finger bei einem für Armschutz ausgelegten Sensor nicht sicher erfasst. Deshalb werden Objekte kleiner als die Mindestgröße möglicherweise mittels Filtern in der Auswertung ausgeschlossen. Es ist auch möglich, eine Mindestgröße oberhalb des Detektionsvermögens zu wählen, also eine an sich bereitgestellte Auflösung nicht auszunutzen. Als Zahlenbeispiele seien 14 mm für Fingerschutz oder im Bereich von 30 bis 80 mm für den Schutz von Extremitäten, insbesondere 55 mm für Oberarmschutz, oder 200 mm für den Körper genannt.

Die Steuer- und Auswertungseinheit ist vorzugsweise als eingebettetes System implementiert. Durch Embedded-Hardware, wie SoC (System on chip) oder FPGA (Field Programmable Gate Array) wird eine kompakte, in sich geschlossene Architektur des 3D-Sensors ermöglicht. Aufgrund der erfindungsgemäßen Bestimmung kürzester Abstände reichen die begrenzten Rechenkapazitäten dennoch für eine Echtzeitberechnung aus. Die Implementierung lässt sich auch effizient zwischen einem Mikroprozessor und einem FPGA beziehungsweise ASIC (Application-Specific Integrated Circuit) aufteilen, beispielsweise in dem das FPGA direkt auf einen RAM-Speicher zugreift, den der Mikroprozessor beschreibt. Alternativ zu einem eingebetteten System ist beispielsweise ein Szenario denkbar, in dem ein Sensor oder mehrere Sensoren die Objekterfassung leisten, etwa in Form von Detektionskarten, und die Abstandsberechnung erfolgt dann auf einem Zentralrechner beziehungsweise in einer übergeordneten Steuerung auf Basis der fusionierten Sensordaten.

Die Steuer- und Auswertungseinheit ist bevorzugt dafür ausgebildet, einen vorausberechneten Abstand zu einem Zwischenbezugsbereich aus dem Speicher zu lesen und daraus den kürzesten Abstand zu bestimmen. In dieser Ausführungsform ist zumindest ein Teil der vorausberechneten Abstände noch nicht das endgültige Ergebnis, sondern wird noch verfeinert. Alternativ werden die aus dem Speicher gelesenen Abstände unmittelbar als kürzester Abstand für den diskretisierten Ort des Objekts verwendet. Es ist auch denkbar, für erfasste Objekte in manchen Teilbereichen des Überwachungsbereichs eine verfeinernde Nachberechnung vorzunehmen und in anderen nicht.

Die Steuer- und Auswertungseinheit ist bevorzugt dafür ausgebildet, für verschiedene Bereiche des Überwachungsbereichs kürzeste Abstände zu dem Bezugsvolumen zu berechnen und in dem Speicher abzulegen. In dieser Ausführungsform ist der 3D-Sensor selbst in der Lage, sich die Abstände vorauszuberechnen. Alternativ geschieht dies auf einem externen Rechner, beispielsweise einem Konfigurationsrechner oder in einem Netzwerk beziehungsweise einer Cloud, und die vorausberechneten Abstände werden anschließend in den Speicher des 3D-Sensors übertragen. Die in dem 3D-Sensor implementierte Berechnung von kürzesten Abständen kann auch zur Laufzeit verwendet werden, etwa wenn ausnahmsweise eine höhere Genauigkeit benötigt wird oder für einen Teilbereich, in dem ein Objekt erfasst wurde, keine vorausberechneten Abstände vorliegen.

In dem Speicher sind vorausberechnete Abstände vorzugsweise in einem 3D-Raster des Überwachungsbereichs abgelegt. Das 3D-Raster deckt zumindest den relevanten Teil des Überwachungsbereichs ab, in dem Objekte erfasst werden sollen, vorzugsweise den gesamten Arbeitsbereich des 3D-Sensors. Zur Laufzeit werden die erfassten Objekte in das 3D-Raster eingeordnet. Sofern eine Detektionskarte erstellt wird, deren Pixel genau an den Positionen besetzt sind, in denen relevante Objekte erfasst wurden, ist damit die laterale Diskretisierung schon vorgenommen, und es wird nur noch der Tiefenwert entsprechend der Tiefenauflösung des 3D-Rasters diskretisiert. Das 3D-Raster ist vorzugsweise nur in lateraler Richtung regelmäßig im Sinne eines Rechteckgitters. Um der Zentralperspektive des 3D-Sensors zu entsprechen, wird das Rechteckgitter vorzugsweise mit zunehmendem Tiefenwert zentrisch gestreckt, die Rasterelemente sind also keine Quader, sondern Pyramidenstümpfe.

Rasterelemente des 3D-Rasters werden vorzugsweise mit zunehmender Entfernung von dem 3D-Sensor höher. Das betrifft nicht die laterale Vergrößerung durch die Zentralperspektive, sondern eine zusätzliche Vergrößerung in der Tiefenrichtung. Die Tiefenschätzung wird für größere Entfernungen ungenauer, und daher reicht es dann auch aus, mit in Tiefenrichtung gröberen Rasterelementen größerer Höhe zu arbeiten.

Bei der Bestimmung eines vorausberechneten Abstands eines Rasterelements des 3D-Rasters wird bevorzugt der kürzeste Abstand zu einer Sichtlinie von dem 3D-Sensor durch das Rasterelement selbst und den aus Sicht des 3D-Sensors dahinter liegenden Teil der Sichtlinie, insbesondere einem Abschattungsvolumen aus dem Rasterelement selbst und den in Sichtrichtung des 3D-Sensors dahinterliegenden Rasterelementen bestimmt. Damit wird die projektive Abschattung, Okklusion oder Verdeckung aus der Zentralperspektive des 3D-Sensors berücksichtig, d. h. die Projektion eines Objekts längs der Sichtlinie von dem 3D-Sensor in die Ferne. Der nicht einsehbare projektive Schatten wird vorsichtshalber als von einem Objekt mitbelegt angesehen. Der Abstand des projektiven Schattens eines Rasterelements zu einem Bezugsvolumen kann kürzer sein als derjenige des Rasterelements, und das ist dann aus Sicherheitsüberlegungen der richtige Wert.

Das Abschattungsvolumen wird bevorzugt für die Bestimmung eines vorausberechneten Abstands mit einem Zylinder mit endseitigen Halbkugeln umhüllt. Damit wird das Abschattungsvolumen überschätzt, was für die Sicherheit unbedenklich ist. Dafür werden die Berechnungen einfacher. Diese Berechnungen erfolgen zwar nicht zur Laufzeit, aber auch vorab stehen nicht beliebige Rechenressourcen zur Verfügung beziehungsweise es hat Vorteile, die Wartezeiten abzukürzen, bis eine Konfiguration getestet oder in Betrieb genommen werden kann.

Diskretisierungsfehler der vorausberechneten Abstände sind vorzugsweise konservativ unterschätzt. Durch die Einordnung in ein 3D-Raster entstehen Diskretisierungsfehler. Aus Gründen der Sicherheit sollte hier nicht einfach gerundet werden, mit der Folge, dass ein kürzester Abstand überschätzt und damit eventuell eine Gefahr zu spät bemerkt wird. Vielmehr wird vorsichtshalber jeder vorausberechnete Abstand so korrigiert, dass Ungenauigkeiten stets nur zu einem Unterschätzen des kürzesten Abstands und deshalb womöglich zu einer unnötigen sicherheitsgerichteten Reaktion, jedoch keiner Gefährdung führen. Beispielsweise wird dazu immer angenommen, dass sich ein Objekt in einem Rasterelement an dessen dem Bezugsvolumen nächsten Punkt befindet.

Vorzugsweise ist je ein Satz vorausberechneter Abstände je Bezugsvolumen gespeichert. Damit werden komplexe Überwachungsaufgaben mit mehreren parallel überwachten Bezugsvolumina und/oder dynamisch sich verändernden Bezugsvolumina aufgeteilt. Die jeweiligen Sätze oder Nachschlagtabellen vorausberechneter Abstände werden im Speicher des Sensors gespeichert, so dass dieser direkt Zugriff hat, oder sie dienen als externe Bausteine, aus denen je nach Situation vorausberechnete Abstände für den Speicher des Sensors zusammengestellt werden.

Bezugsvolumina sind vorzugsweise aktivierbar, und vorausberechnete Abstände zu mindestens einer Kombination parallel aktiver Bezugsvolumina sind aus vorausberechneten Abständen je Bezugsvolumen zusammengestellt. Das dient dazu, parallel mehrere Bezugsvolumina zu überwachen, etwa mehrere Maschinen oder verschiedene Bereiche derselben Maschine. Die Sätze vorausberechneter Abstände je Bezugsvolumen, oder die Nachschlagtabellen, bilden eine Art Baukastensystem, aus dem die für die Überwachungssituation erforderlichen Bausteine oder Nachschlagtabellen entsprechend der aktiven Bezugsvolumina zusammengefügt werden. Dadurch können die Bezugsvolumina in beliebiger Kombination und bis zur Grenze des Speichers und Speicherdurchsatzes beliebiger Anzahl aktiv sein, während dennoch mit vorausberechneten Abständen gearbeitet wird. Nachschlagtabellen können derart zusammengeführt sein, dass darin für jedes Rasterelement mehrere Einträge entsprechend der einzelnen aktiven Bezugsvolumina vorgenommen werden. Alternativ werden die kürzesten Abstände zu dem jeweils kürzesten Abstand nur zu dem nächsten Bezugsvolumen konsolidiert. Damit kann dann natürlich nur noch ein globaler kürzester Abstand zu allen Bezugsvolumina gemeinsam bestimmt werden, nicht mehr zu den einzelnen Bezugsvolumina und ohne zu wissen, welches konkrete Bezugsvolumen das nächste ist.

Die Steuer- und Auswertungseinheit ist bevorzugt dafür ausgebildet, auf eine andere Kombination aktiver Bezugsvolumina umzuschalten. Dazu werden vorzugsweise die Sätze von vorausberechneten Abständen je Bezugsvolumen neu kombiniert. Die wechselnden Bezugsvolumina bilden eine Dynamik des überwachten Arbeitsprozesses ab, etwa wenn ein Roboter seinen Arbeitsbereich wechselt. Im Prinzip wäre es denkbar, die Bezugsvolumina großzügig zu definieren, so dass sie alle Phasen des Prozessablaufs zugleich abdecken. Wechselnde Bezugsvolumina können aber viel kleiner bleiben, da sie nur die aktuell relevanten Teilbereiche umfassen.

Einzelne oder mehrere vorbereitende Schritte, bis die für die nächste Betriebsphase erforderlichen vorausberechneten Abstände in dem Speicher des 3D-Sensors bereitliegen, können je nach Ausführungsform in dem 3D-Sensor selbst und/oder extern beispielsweise in einem Konfigurationsrechner, einer übergeordneten Steuerung oder einer Cloud mit anschließendem Übertragen der Ergebnisse in den Speicher des 3D-Sensors abgearbeitet werden.

In dem Speicher ist bevorzugt zu einem vorausberechneten Abstand eine Zusatzinformation gespeichert, die den Abstand oder den Bezugspunkt, zu dem der Abstand besteht, weiter charakterisiert. Beispielsweise wird durch eine Zusatzinformation angegeben, zu welchem konkreten geometrischen Punkt einer Gefahrenstelle oder Maschine der kürzeste Abstand besteht, oder es wird näher beschrieben, was sich dort befindet. Beispielsweise ist eine Werkzeugspitze unter Umständen sicherheitstechnisch anders zu bewerten als ein nur wenig bewegter, stumpfer Gelenkbereich.

Zumindest einige der vorausberechneten Abstände sind vorzugsweise relativ zu anderen vorausberechneten Abständen gespeichert. Insbesondere stehen nur für einige Rasterelemente, etwa die oberste, dem 3D-Sensor zugewandte Schicht, Absolutwerte zur Verfügung, während die übrigen vorausberechneten Abstände nur die Differenz zu diesen Absolutwerten direkt oder kaskadierend angeben. Das ist eine speichereffiziente Kodierung oder Komprimierung, mit der weniger Speicherbedarf besteht. Inkrementelle Komprimierung ermöglicht geringerer Speicherverbrauch

In bevorzugter Weiterbildung werden mehrere 3D-Sensoren zu einem Sensorverbund zusammengeschlossen, die einander in ihren Überwachungsbereichen und/oder ihrer Perspektive ergänzen. Ein möglicher Vorteil ist, durch gegenseitige Ergänzung einen insgesamt größeren Überwachungsbereich zu erfassen. Außerdem sind unterschiedliche Perspektiven hilfreich, um Abschattungen zu verringern. Um die gemeinsame Auswertung besonders einfach zu halten, werden zunächst kürzeste Abstände aus Sicht der einzelnen 3D-Sensoren bestimmt und anschließend zwischen den 3D-Sensoren verglichen und verrechnet, um den kürzesten Abstand für den Sensorverbund zu finden. Prinzipiell können Objektpositionen oder Empfangssignale, insbesondere 3D-Punktewolken, auch früher in der Verarbeitungskette fusioniert werden, der Sensorverbund entspricht dann einem mächtigeren 3D-Sensor mit größerem Sichtfeld und/oder weniger Abschattung.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Darstellung eines 3D-Sensors und seines Überwachungsbereichs;
- Fig. 2: eine beispielhafte Überwachungssituation mit mehreren Gefahrenstellen und Objekten;
- Fig. 3: eine schematische Seitenansicht einer beispielhaften Erfassungssituation einer Person in der Nähe einer Gefahrenstelle;
- Fig. 4: eine Darstellung eines 3D-Rasters für die Vorausberechnung von kürzesten Abständen;
- Fig. 5: eine Darstellung der Rasterelemente eines Sichtstrahls des 3D-Sensors; und
- Fig. 6a-b: eine weitere Darstellung der Rasterelemente eines Sichtstrahls sowie eine vereinfachende Umhüllung mit einem Zylindermodell.

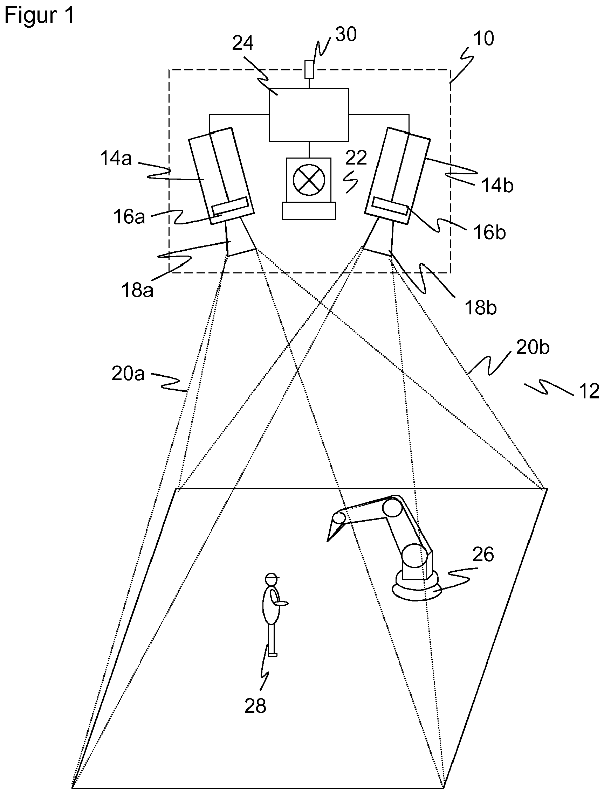

Figur 1 zeigt in einer schematischen dreidimensionalen Darstellung den allgemeinen Aufbau einer Stereokamera zur Aufnahme einer Tiefenkarte. Die Stereokamera ist nur ein Beispiel für einen erfindungsgemäßen 3D-Sensor 10, an dem die Objekterfassung in dreidimensionalen Bilddaten erläutert wird. Ebenso denkbar wären die einleitend genannten anderen 3D-Kameras mit Bestimmung der Lichtlaufzeit oder einer Auswertung der Störung passiver zweidimensionaler Muster oder mit Korrelation von Bild und projizierten Beleuchtungsmustern sowie Laserscanner und andere SD-Erfassungsprinzipien.

Zur Erfassung eines Überwachungs- oder Raumbereichs 12 sind zwei Kameramodule 14a, 14b in einem bekannten festen Abstand zueinander montiert und nehmen jeweils Bilder des Raumbereichs 12 auf. In jedem Kameramodul 14a, 14b ist ein Bildsensor 16a, 16b vorgesehen, üblicherweise ein matrixförmiger Aufnahmechip, der ein rechteckiges Pixelbild aufnimmt, beispielsweise ein CCD- oder ein CMOS-Sensor. Die beiden Bildsensoren 16a, 16b bilden gemeinsam einen 3D-Bildsensor oder Lichtempfänger zur Erfassung einer Tiefenkarte. Den Bildsensoren 16a, 16b ist je ein Objektiv 18a, 18b mit einer abbildenden Optik zugeordnet, welche in der Praxis als jedes bekannte Abbildungsobjektiv realisiert sein können. Der maximale Sichtwinkel dieser Optiken ist in Figur 1 durch gestrichelte Linien dargestellt, die jeweils eine Sichtpyramide 20a, 20b bilden.

Zwischen den beiden Bildsensoren 16a, 16b ist eine Beleuchtungseinheit 22 vorgesehen, um den Raumbereich 12 mit einem strukturierten Muster auszuleuchten. Die dargestellte Stereokamera ist demnach für aktive Stereoskopie ausgebildet, bei der das Muster auch einer an sich strukturlosen Szenerie überall auswertbare Kontraste aufprägt. Alternativ ist keine oder eine homogene Beleuchtung vorgesehen, um die natürlichen Objektstrukturen im Raumbereich 12 auszuwerten, was aber regelmäßig zu zusätzlichen Bildfehlern führt.

Mit den beiden Bildsensoren 16a, 16b und der Beleuchtungseinheit 22 ist eine Steuer- und Auswertungseinheit 24 verbunden. Die Steuer- und Auswertungseinheit 24 kann in verschiedenster Hardware implementiert sein, beispielsweise digitalen Bausteinen wie Mikroprozessoren, ASICs (Application Specific Integrated Circuit), FPGAs (Field Programmable Gate Array), GPUs (Graphics Processing Unit) oder Mischformen davon, die sich bevorzugt in dem 3D-Sensor 10 befinden, die aber auch beliebig auf interne und externe Komponenten verteilbar sind, wobei externe Komponenten auch über Netzwerk oder eine Cloud eingebunden sein können, soweit Latenzen beherrscht oder toleriert werden können. Da das Erzeugen der Tiefenkarte und deren Auswertung sehr rechenintensiv sind, wird vorzugsweise eine zumindest teilweise parallele Architektur gebildet.

Die Steuer- und Auswertungseinheit 24 erzeugt mit Hilfe der Beleuchtungseinheit 22 das strukturierte Beleuchtungsmuster und empfängt Bilddaten der Bildsensoren 16a, 16b. Aus diesen Bilddaten berechnet sie mit Hilfe einer stereoskopischen Disparitätsschätzung die 3D-Bilddaten beziehungsweise die Tiefenkarte des Raumbereichs 12. Der gesamte erfassbare Raumbereich 12 kann über eine Konfiguration eingeschränkt werden, beispielsweise um störende oder nicht notwendige Bereiche auszublenden.

Eine wichtige sicherheitstechnische Anwendung des 3D-Sensors 10 ist die Überwachung einer Maschine 26, die in der Figur 1 durch einen Roboter symbolisiert ist. Der 3D-Sensor 10 ist dafür vorzugsweise fehlersicher im Sinne von Sicherheitsnormen wie den einleitend genannten ausgelegt. Die Maschine 26 kann auch wesentlich komplexer sein als gezeigt, aus vielen Teilen bestehen oder sogar eigentlich eine Anordnung mehrerer Maschinen sein, etwa mehrerer Roboter oder Roboterarme. Es wird überwacht, ob Objekte 28, dargestellt als Person, durch die Maschine 26 gefährdet sind und eine entsprechende sicherheitsgerichtete Reaktion erfolgen muss, beispielsweise die Maschine 26 anhält, abbremst oder ausweicht. Dazu weist der 3D-Sensor 10 eine sichere Schnittstelle 30 auf, über die entsprechende Reaktionen ausgelöst oder für eine Sicherheitsbewertung erforderliche Überwachungsgrößen ausgegeben werden, entweder direkt an die Maschine 26 oder an eine Zwischenstation wie eine sichere Steuerung.

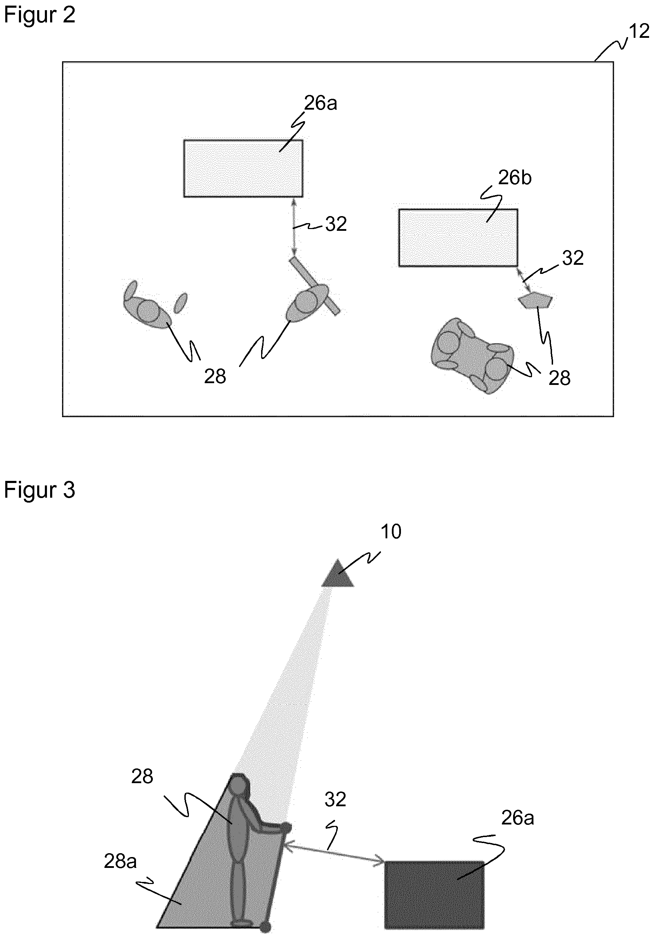

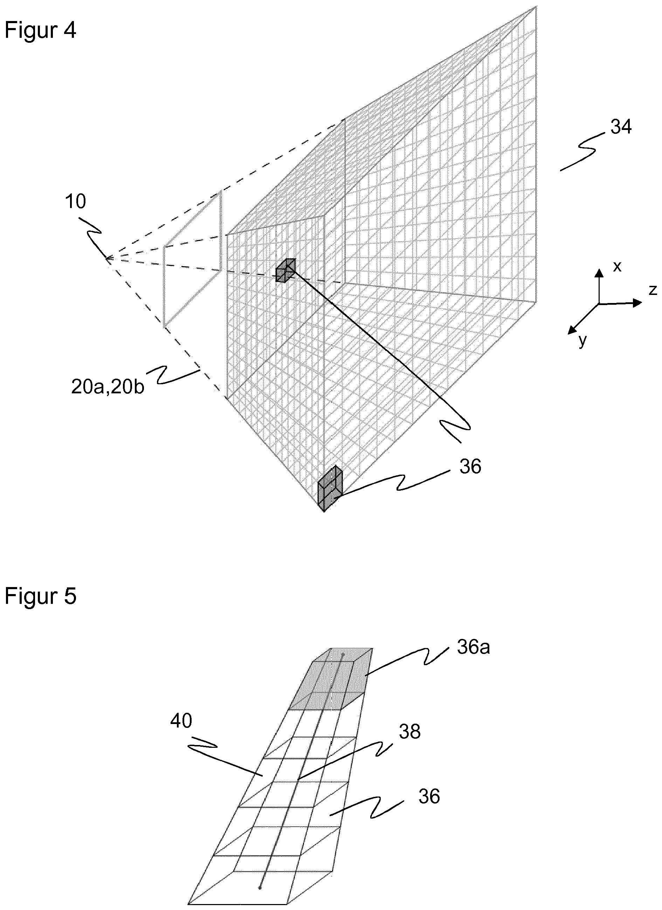

Die Sicherheitsbewertung basiert auf einer Abstandsüberwachung, die nun zunächst unter Bezugnahme auf die Figuren 2 und 3 inhaltlich erläutert wird. Anschließend werden unter Bezugnahme auf die Figuren 4 bis 6 effiziente Berechnungsverfahren für die zugrundeliegenden kürzesten Abstände vorgestellt. Obwohl die Erfindung für eine Absicherung einer Mensch-Maschine-Kollaboration beschrieben wird, lassen sich diese Berechnungsverfahren auch für andere Überwachungsaufgaben nutzen.

Figur 2 zeigt eine beispielhafte Überwachungssituation in dem Raumbereich 12 mit mehreren Gefahrenstellen 26a, 26b und Objekten 28. Figur 3 ist eine schematische Seitenansicht einer einzelnen Gefahrenstelle 26a mit einem Objekt 28 in deren Nähe.

Eine Gefahrenstelle 26a, 26b ist eine bevorzugte Modellierung der gefahrbringenden Maschine 26 und beschreibt den potentiell für den Menschen gefährlichen Bereich als Volumen im Raum. Beispielsweise ist eine Gefahrenstelle 26a, 26b der Raumbereich, in dem die Maschine 26 in einem jeweiligen Zeitabschnitt Arbeitsbewegungen ausführt, oder noch allgemeiner ein Raumbereich, der die Maschine 26 absichert, sei es weil die Maschine 26 davon zumindest teilweise umgeben ist oder weil die Gefahrenstelle 26a, 26b den Zugang zu der Maschine 26 sperrt. Die Gefahrenstelle 26a, 26b kann die Maschine 26 mit etwas Abstand umgeben, um den Arbeitsbewegungen ausreichend Spiel zu lassen. Es können einfache Gefahrenstellen 26a, 26b wie Quader oder Kugeln definiert und dafür gewisse Leerräume in Kauf genommen werden, um die Berechnungen zu vereinfachen. Die Erfindung führt aber die aufwändigen Berechnungen schon vorab durch, so dass vorzugsweise auch komplexe Geometrien zugelassen sind.

Mehrere Gefahrenstellen 26a, 26b können parallel aktiv sein. Sie modellieren beispielsweise mehrere Maschinen 26 und/oder mehrere bewegliche Teilabschnitte einer Maschine 26. Gefahrenstellen 26a, 26b können starr sein und sämtliche denkbaren Arbeitsbewegungen umfassen. Alternativ sind jeweils Gefahrenstellen 26a, 26b für Teilabschnitte der Arbeitsbewegung definiert, die in einer dem Prozess entsprechenden Abfolge benutzt werden und die kleiner und besser angepasst sind. Gefahrenstellen 26a, 26b können durch einen Einrichter, gegebenenfalls je Prozessschritt, in einem entsprechenden Softwarewerkzeug vorkonfiguriert werden, auch halb- oder vollautomatisch durch Beobachten der Arbeitsabläufe, oder beispielsweise auch dynamisch von einer Steuerung der Maschine 26 übernommen werden.

Objekte 28 sind meist als Personen gezeigt, weil es um den Personenschutz geht, wobei aber der 3D-Sensor 10 vorzugsweise nicht unterscheidet, ob ein Objekt 28 eine Person ist, oder jedenfalls nur anhand von einfachen Kriterien wie Mindestgrößen. Einfache oder komplexe Körpermodelle sind andererseits auch nicht ausgeschlossen. Die Steuer- und Auswertungseinheit 24 erfasst die Objekte 28 mit Hilfe der Tiefenkarte. Eine mögliche Repräsentation ist eine sogenannte Detektionstiefenkarte, deren Pixel einen Abstandswert enthalten, wo immer an der jeweiligen lateralen Position ein gültiges Objekt 28 erkannt wurde, und die sonst leer bleibt. Gültig bedeutet in diesem Zusammenhang, dass das Objekt 28 auch nach Filterungen mit einer Mindestgröße, einem Körpermodell, einem Zusammenhang mit einem grob erfassten Objekt wie in EP 3 200 122 A1 oder dergleichen noch als relevant betrachtet wird.

Im Beispiel der Figur 2 sind zwei Gefahrenstellen 26a, 26b zu überwachen, und derzeit sind von dem 3D-Sensor 10 in deren Umgebung vier Objekte 28 erkannt. Zwei der Objekte 28 sind, ohne dass der 3D-Sensor 10 diese Information explizit gewinnen muss, einzelne Personen, ein weiteres Objekt 28 besteht aus zwei miteinander verschmolzenen Personen, sei es weil sie zusammen ein Werkstück tragen und so tatsächlich verbunden sind oder weil die Segmentierung die beiden Personen nicht trennen konnte. Hinzu kommt noch ein Objekt 28, das nicht näher identifizierbar ist und das ein Gegenstand oder eine Fehlerfassung sein könnte. Fällt es unter die Mindestgröße, so kann es ignoriert werden, ansonsten muss es vorsichtshalber als Person interpretiert werden. Der nicht verbundene Arm der Person ganz links bildet je nach Auswertung ein eigenes weiteres Objekt, oder er wird, insbesondere nach der Lehre der EP 3 200 122 A1, der Person zugeschlagen.

Die Steuer- und Auswertungseinheit 24 berechnet kontinuierlich den kürzesten Abstand des einer jeweiligen Gefahrenstelle 26a, 26b nächsten Objekts 28. Dazu müssen im Prinzip alle Objektpunkte betrachtet werden. Vorzugsweise wird die Tiefenkarte vorgefiltert und enthält nur noch die detektierten Objekte, beziehungsweise es wird eine oben kurz eingeführte Detektionskarte verwendet, die nur die Entfernungen der relevanten Objekte zu dem 3D-Sensor 10 enthält.

In Figur 2 und 3 sind Pfeile 32 eingezeichnet, welche in der aktuellen Situation die kürzesten Abstände bezüglich der Gefahrenstellen 26a, 26b darstellen. Der kürzeste Abstand verbindet den nächsten Punkt einer Gefahrenstelle 26a, 26b mit dem nächsten Punkt des nächsten Objekts 28. Bei dieser Darstellung ist angenommen, dass das kleine Objekt 28 rechts unten in Figur 2 die Mindestgröße überschreitet. Andernfalls würde es ignoriert und stattdessen der Abstand zu den beiden verschmolzenen Personen ausgegeben, die das zweitnächste Objekt 28 bilden. Wie in Figur 3 zu erkennen, wird bei der Berechnung der kürzesten Abstände auch der projektive Schatten 28a der Objekte 28 berücksichtigt, also derjenige Bereich, den ein Objekt 28 aus der Zentralperspektive des 3D-Sensors 10 verdeckt. Dadurch ist auch in diesem Beispiel der kürzeste Abstand etwas geringer, als es derjenige zu dem Objekt 28 selbst wäre. Das ist aber sicherheitstechnisch erforderlich, weil sich an dieser Stelle ein relevantes Objekt 28 verbergen könnte.

Der jeweils zuletzt bezüglich einer Gefahrenstelle 26a, 26b ermittelte kürzeste Abstand des dieser Gefahrenstelle 26a, 26b nächsten Objekts 28 wird zyklisch oder azyklisch je nach geforderter und möglicher Ansprechzeit des 3D-Sensors 10 an der sicheren Schnittstelle 30 bereitgestellt, und zwar vorzugsweise unterscheidbar je Gefahrenstelle 26a, 26b. Eine an die sichere Schnittstelle 30 angeschlossene Steuerung, sei es eine übergeordnete Steuerung oder diejenige der Maschine 26, wertet den kürzesten Abstand aus und plant erforderlichenfalls abhängig von dem kürzesten Abstand den nächsten Arbeitsschritt neu. Im Gefährdungsfall wird eine sicherheitsgerichtete Reaktion eingeleitet so dass durchgehend der erforderliche Sicherheitsabstand zwischen Mensch und Maschine gewahrt bleibt. Ob dies erforderlich ist, kann neben dem kürzesten Abstand von weiteren Bedingungen wie den Geschwindigkeiten oder der Beschaffenheit von Objekt 28 und Maschinenbereich 26 der drohenden Kollision abhängen, wofür je nach Ausführungsform weitere Größen mit dem kürzesten Abstand ausgegeben werden.

Die Abstandsberechnung ist ein äußerst rechenintensiver Prozess, da für den Vergleich zum Auffinden des kürzesten Abstands zwischen einer Vielzahl von Raumpunkten von Gefahrenstelle 26a, 26b und Objekt 28 Abstände zu berechnen sind, und das auch für mehrere Gefahrenstellen 26a, 26b und Objekte 28 bei Bildwiederholfrequenzen von einigen zehn Hertz. Um dies mit begrenzten Rechenressourcen in Echtzeit oder Quasi-Echtzeit innerhalb einer definierten Ansprechzeit zu leisten, werden erfindungsgemäß Abstände vorausberechnet. Die vorausberechneten Abstände werden beispielhaft in einer Nachschlagtabelle (LUT, Lookup Table) gespeichert, wobei aber trotz der Verwendung dieses Begriffs andere Repräsentationen genauso denkbar sind.

Die Vorbereitung von Nachschlagtabellen für eine nachfolgende Betriebsphase geschieht vorzugsweise in mehreren Schritten. Zunächst wird für jede Gefahrenstelle 26a, 26b, die irgendwann im Prozessablauf aktiv werden soll, eine individuelle Nachschlagtabelle erzeugt. Daraus werden für alle Kombinationen von gleichzeitig aktiven Gefahrenstellen 26a, 26b, die im Prozessablauf vorkommen, kombinierte Nachschlagtabellen gebildet. Zur Laufzeit wird für den nachfolgenden Prozessschritt mit den jeweiligen Gefahrenstellen 26a, 26b die passende kombinierte Nachschlagtabelle aktiviert, und mit deren Hilfe werden die kürzesten Abstände effizient berechnet. Dies ist nur eine bevorzugte Ausführungsform, prinzipiell können vorausberechnete Abstände auch auf andere Weise gewonnen und insbesondere individuell erstellt statt aus individuellen Nachschlagtabellen je Gefahrenstelle 26a, 26b kombiniert werden, oder es werden unabhängig vom Prozessablauf sämtliche Kombinationen vorbereitet.

Die Figuren 4 bis 6 illustrieren den ersten Schritt, mit dem jeweils eine individuelle Nachschlagtabelle für eine einzelne Gefahrenstelle 26a, 26b berechnet wird (HDM, Hazard Distance Map). Vorab der Laufzeit, was hier als Konfigurationszeit bezeichnet wird, erzeugt die Steuer- und Auswertungseinheit 24 selbst beziehungsweise ein Konfigurationsrechner insbesondere in einer Cloud ein 3D-Raster 34. Die Auflösung in lateraler X-Y-Richtung entspricht vorzugsweise derjenigen der Tiefen- oder Detektionskarte, typischerweise in der Größenordnung mehrerer 100 x 100. In der Tiefen- oder Z-Richtung wird eine Tiefendiskretisierung von beispielsweise zehn bis zwanzig Stufen oder mehr gewählt. Das 3D-Raster 34 muss nicht regelmäßig sein wie gezeigt. Insbesondere kann die Höhe der einzelnen Rasterelemente 36 mit dem Tiefenwert, also zunehmender Entfernung von dem 3D-Sensor 10 größer werden. Das entspricht der wachsenden Tiefenungenauigkeit des 3D-Sensors, weshalb eine feine Rasterung in größeren Entfernungen nicht unbedingt sinnvoll ist.

Das 3D-Raster 34 deckt vorzugsweise, aber nicht notwendigerweise den gesamten Arbeitsbereich des 3D-Sensors 10 ab, wobei der Arbeitsbereich wiederum nur ein Teil des maximal möglichen Sichtbereichs sein kann. Die einzelnen Rasterelemente 36 des 3D-Rasters 34 sind keine regulären Voxel, sondern repräsentieren aufgrund der Zentralperspektive des 3D-Sensors 10 Pyramidenstümpfe. Gespeichert wird das 3D-Raster 34 dennoch als geordnetes Feld mit Indices (x, y, z) oder eine vergleichbare Repräsentation, ohne auf die Form der Pyramidenstümpfe Rücksicht zu nehmen.

Figur 5 zeigt die Rasterelemente 36 längs eines beispielhaften Sichtstrahls 38 des 3D-Sensors 10, der hier vereinfachend mit nur fünf Tiefenwerten diskretisiert ist. Im gezeigten Beispiel wird der Abstand zu einer Gefahrenstelle 26a, 26b für das oberste Rasterelement 36a des Sichtstrahls 38 berechnet. Bei dieser Abstandsbestimmung wird auch der gesamte Sichtstrahls 38 bis zum unteren Ende verwendet. Der vorausberechnete kürzeste Abstand für das Rasterelement 36a kann also zu einem Bereich des Sichtstrahls 38 bestehen, der unterhalb des Rasterelements 36a liegt. Das entspricht einer Berücksichtigung des in Figur 3 gezeigten projektiven Schattens 28a, denn ein Objekt 28 im obersten Rasterelement 36a würde weitere Objekte längs des Sichtstrahls 38 verdecken. Alternativ zu einer Bestimmung von Abständen zum Sichtstrahl 38, d. h. einer im Prinzip unendlich dünnen Linie, kann der Abstand zu dem Sichtstrahlvolumen 40 ab dem Rasterelement 36a nach unten bestimmt werden, wobei das Sichtstrahlvolumen 40 auch als Abschattungsvolumen bezeichnet wird, da es den projektiven Schatten 28a mit umfasst.

Die konkrete geometrische Abstandsbestimmung im dreidimensionalen Raum ist rechenintensiv, zumal vorzugsweise beliebig komplexe Formen der Gefahrenstelle 26a, 26b zugelassen sind. Sie ist aber trotz des erheblichen Aufwands mathematisch elementar und wird hier nicht weiter erklärt. Der gefundene kürzeste Abstand wird in dem Rasterelement 36a abgelegt. Zu beachten ist, dass Diskretisierungsfehler durch die endliche Auflösung des 3D-Rasters 34 stets so behandelt werden müssen, dass die kürzesten Abstände konservativ unterschätzt sind. Das kann in der Form berücksichtigt werden, dass der vorausberechnete Wert dem ungünstigsten Punkt in dem Rasterelement 36 entspricht, oder es wird später bei der Diskretisierung beziehungsweise Einordnung der tatsächlichen Objektpunkte in das 3D-Raster 34 zur Laufzeit berücksichtigt.

Nachdem der vorausberechnete Abstand für das oberste Rasterelement 36a bestimmt ist, wird das darunterliegende Rasterelement 36 betrachtet und der nun kürzere verbleibende Sichtstrahl 38 bis zum unteren Ende zur Abstandsberechnung verwendet. Nachdem das 3D-Raster 34 auch nach unten hin für die weiteren Rasterelemente 36a des Sichtstrahls 38 mit vorausberechneten Abständen gefüllt ist, wird zum nächsten Sichtstrahl 38 übergegangen, bis das 3D-Raster 34 und damit die Nachschlagtabelle für diese Gefahrenstelle 26a, 26b vollständig ist.

Es ist denkbar, in der Nachschlagtabelle zur Datenkomprimierung inkrementelle Werte zu speichern. Beispielsweise wird nur für die oberste Schicht von Rasterelementen 36a des 3D-Rasters 34 ein Absolutwert gespeichert und für die übrigen Rasterelemente 36 die Änderung zum jeweiligen obersten Rasterelement 36a desselben Sichtstrahls 38, oder kaskadierend zum jeweiligen oberen Nachbarn. Umgekehrt können aber auch Zusatzinformationen zu den vorausberechneten Abständen gespeichert werden, etwa der Bezugspunkt der Gefahrenstelle 26a, 26b der den kürzesten Abstand geliefert hat, der Bezugspunkt innerhalb des Rasterelements 36 oder welcher konkrete Teil der Maschine 26 im kürzesten Abstand liegt und wie gefährlich dieser ist.

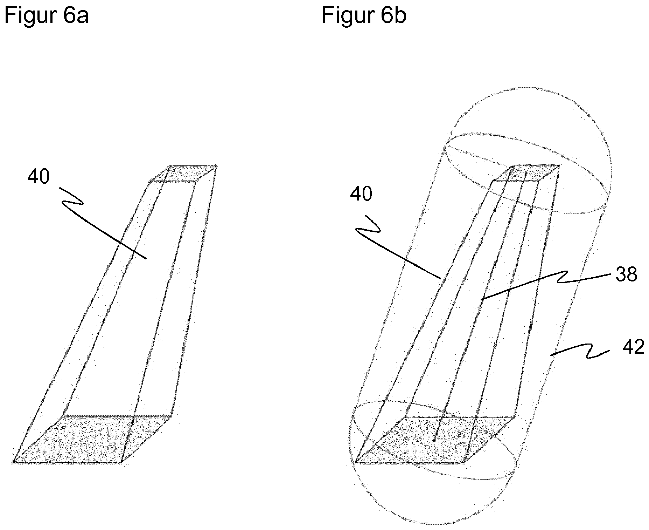

Bisher wurde bei der Abstandsberechnung entweder ein Abstand zu dem im Prinzip unendlich dünnen Geradensegment des Sichtstrahls 38 der genauen pyramidenstumpfförmigen Geometrie des Sichtstrahlvolumens 40 der umgebenden Rasterelemente 36 berechnet. Figur 6 illustriert eine mögliche Approximation in einer weiteren Ausführungsform. Dabei zeigt Figur 6a zunächst noch einmal das Sichtstrahlvolumen 40 eines Sichtstrahls 38 als Pyramidenstumpf. Figur 6b stellt die denkbare Approximation mittels eines Zylinders 42 dar, der an seinen Enden durch Halbkugeln abgeschlossen ist und anschaulich eine Kapsel bildet. Letztlich wird so der Sichtstrahl 38 verbreitert, bis er das Sichtstrahlvolumen 40 einschließt. Praktisch wird für die Abstandsbestimmung einfach von den Werten, die zu dem unendlich dünnen Sichtstrahl 38 selbst bestimmt werden, der Radius des Zylinders 42 abgezogen. Dieser Radius wird aus der Diagonalen der Bodenfläche des Pyramidenstumpfes abgeleitet. Durch den Zylinder 42 ist die geforderte konservative Unterschätzung der vorausberechneten Abstände automatisch und überall mit einer sehr einfachen Rechenvorschrift gewährleistet. Ein weiterer Vorteil dieses Vorgehens ist gegenüber einer Berücksichtigung der genauen pyramidenstumpfförmigen Geometrie des Sichtstrahlvolumens 40 eine vereinfachte Berechnung. Das findet zwar vor der Laufzeit statt, aber auch dafür sind kurze Wartezeiten und einfache Implementierungen von Vorteil.

Auf die beschriebene Weise wird jeweils eine Nachschlagtabelle oder HDM für jede Gefahrenstelle 26a, 26b erzeugt. Im Betrieb können vorzugsweise mehrere Gefahrenstellen 26a, 26b parallel aktiv sein. Um dann die Ausgabe mehrerer kürzester Abstände jeweils zu mehreren Gefahrenstellen 26a, 26b parallel berechnen zu können, werden nun vorteilhafterweise in einem zweiten Schritt die einzelnen Nachschlagtabellen kombiniert. Wenn eine dynamische Umschaltung der jeweils aktiven Gefahrenstellen 26a, 26b für verschiedene Prozessschritte vorgesehen ist, werden entsprechend mehrere Kombinationen für die möglichen Konfigurationen gleichzeitig aktiver Gefahrenstellen 26a, 26b vorbereitet. Eine solche kombinierte Nachschlagtabelle aus mehreren HDM wird auch als ADM (Activation Distance Map) bezeichnet.

Die kombinierte Nachschlagtabelle beinhaltet gemeinsam alle vorausberechneten Abstände für eine bestimmte Konfiguration aktiver Gefahrenstellen 26a, 26b. Eine denkbare Struktur ist diejenige des 3D-Rasters 34 und damit der einzelnen Nachschlagtabelle (HDM) selbst, nur dass in jedem Rasterelement 36 nicht nur ein Eintrag vorgenommen wird, sondern so viele hintereinander, wie Gefahrenstellen 26a, 26b parallel aktiv sind. Die Speicherstruktur ist dann (x, y, z, i), wobei i die Anzahl der parallel aktiven Gefahrenstellen 26a, 26b ist. Alternativ wird weiterhin nur ein Eintrag je Rasterelement 36 gespeichert, der dem über alle beitragenden einzelnen Nachschlagtabellen konsolidierten Abstand zur nächsten Gefahrenstelle 26a, 26b entspricht. Dann lässt sich natürlich zur Laufzeit nicht mehr differenzieren, zu welcher konkreten Gefahrenstelle 26a, 26b der kürzeste Abstand eines nächsten Objekts 28 besteht, aber der global kürzeste Abstand zu irgendeiner Gefahrenstelle 26a, 26b kann für bestimmte Sicherheitskonzepte genügen.

Die kombinierten Nachschlagtabellen werden beispielsweise noch zur Konfigurationszeit oder beim Booten des Systems aus den einzelnen Nachschlagtabellen fusioniert. Jedenfalls liegt dann für den Betrieb für jede im Prozessablauf benötigte parallele Aktivierung von Gefahrenstellen 26a, 26b eine kombinierte Nachschlagtabelle im Speicher des 3D-Sensors 10 bereit.

Zur Laufzeit wird dann zunächst mit den aktiven Gefahrenstellen 26a, 26b auch die zugehörige kombinierte Nachschlagtabelle aktiviert. Bei einer Umschaltung zur Laufzeit auf eine andere Kombination von Gefahrenstellen 26a, 26b wird einfach auf den Speicherbereich umgeschaltet, in dem die passende kombinierte Nachschlagtabelle liegt.

Jeder Objektpunkt der erfassten, relevanten Objekte 28 beziehungsweise jeder Eintrag in der Detektionskarte wird entsprechend dem 3D-Raster 34 diskretisiert. Wenn dessen laterale X-Y-Auflösung der Auflösung der Tiefen- beziehungsweise Detektionskarte entspricht, beschränkt sich die Diskretisierung auf den Tiefenwert. Dann wird der vorausberechnete Abstand zu jeder aktiven Gefahrenstelle 26a, 26b aus dem Rasterelement 36 der kombinierten Nachschlagtabelle herausgelesen, das der Diskretisierung des betrachteten Objektpunkts entspricht. Der so ermittelte, passende vorausberechnete Abstand wird entweder direkt als kürzester Abstand für diesen Objektpunkt verwendet, oder er dient als Grundlage für eine feinere Abstandsberechnung, etwa der Bestimmung des nächsten Sichtstrahls 38, und der Abstand wird damit nur einmal exakt berechnet.

Ein einfacher Vergleich der so aufgefundenen kürzesten Abstände je Objektpunkt, der auch schon sukzessive in dem Durchgang durch die Objektpunkte zum jeweiligen Nachschlagen beziehungsweise Berechnen von deren Abstand zur nächsten Gefahrenstelle 26a, 26b durchgeführt werden kann, liefert dann sehr schnell den gesuchten kürzesten Abstand zwischen den einzelnen Gefahrenstellen 26a, 26b und dem jeweils nächsten Objekt 28.

## Patentansprüche

1. 3D-Sensor (10), insbesondere 3D-Kamera, zum Überwachen eines Überwachungsbereichs (12), wobei der 3D-Sensor (10) mindestens einen Lichtempfänger (16a-b) zum Erzeugen eines Empfangssignals aus Empfangslicht aus dem Überwachungsbereich (12) sowie eine Steuer- und Auswertungseinheit (24) aufweist, die dafür ausgebildet ist, durch Auswerten des Empfangssignals Objekte (28) in dem Überwachungsbereich (12) zu erfassen und den kürzesten Abstand der erfassten Objekte (28) zu mindestens einem Bezugsvolumen (26a, 26b) zu bestimmen,
**dadurch gekennzeichnet,**
**dass** die Steuer- und Auswertungseinheit (24) einen Speicher aufweist und weiterhin dafür ausgebildet ist, für die Bestimmung des jeweiligen kürzesten Abstands eines erfassten Objekts (28) mindestens einen vorausberechneten Abstand zu dem Bezugsvolumen (26a, 26b) aus einem Speicher zu lesen.

2. 3D-Sensor (10) nach Anspruch 1,
wobei das Bezugsvolumen (26a, 26b) eine Gefahrenstelle ist, welche eine Maschine (26) absichert.

3. 3D-Sensor (10) nach Anspruch 1 oder 2,
wobei die Steuer- und Auswertungseinheit (24) als eingebettetes System implementiert ist.

4. 3D-Sensor (10) nach einem der vorhergehenden Ansprüche,
wobei die Steuer- und Auswertungseinheit (24) dafür ausgebildet ist, einen vorausberechneten Abstand zu einem Zwischenbezugsbereich aus dem Speicher zu lesen und daraus den kürzesten Abstand zu bestimmen.

5. 3D-Sensor (10) nach einem der vorhergehenden Ansprüche,
wobei die Steuer- und Auswertungseinheit (24) dafür ausgebildet ist, für verschiedene Bereiche des Überwachungsbereichs (12) kürzeste Abstände zu dem Bezugsvolumen (26a, 26b) zu berechnen und in dem Speicher abzulegen.

6. 3D-Sensor (10) nach einem der vorhergehenden Ansprüche,
wobei in dem Speicher vorausberechnete Abstände in einem 3D-Raster (34) des Überwachungsbereichs (12) abgelegt sind.

7. 3D-Sensor (10) nach Anspruch 6,
wobei Rasterelemente (36) des 3D-Rasters (34) mit zunehmender Entfernung von dem 3D-Sensor (10) höher werden.

8. 3D-Sensor (10) nach Anspruch 6 oder 7,
wobei bei der Bestimmung eines vorausberechneten Abstands eines Rasterelements (36) des 3D-Rasters (34) der kürzeste Abstand zu einer Sichtlinie (38) von dem 3D-Sensor (10) durch das Rasterelement (36) selbst und den aus Sicht des 3D-Sensors (10) dahinter liegenden Teil der Sichtlinie (38), insbesondere einem Abschattungsvolumen (40) aus dem Rasterelement (36) selbst und den in Sichtrichtung des 3D-Sensors (10) dahinterliegenden Rasterelementen (36) bestimmt wird.

9. 3D-Sensor (10) nach Anspruch 8,
wobei das Abschattungsvolumen (40) für die Bestimmung eines vorausberechneten Abstands mit einem Zylinder (42) mit endseitigen Halbkugeln umhüllt wird.

10. 3D-Sensor (10) nach einem der vorhergehenden Ansprüche,
wobei Diskretisierungsfehler der vorausberechneten Abstände konservativ unterschätzt sind.

11. 3D-Sensor (10) nach einem der vorhergehenden Ansprüche,
wobei je ein Satz vorausberechneter Abstände je Bezugsvolumen (26a, 26b) gespeichert ist.

12. 3D-Sensor (10) nach einem der vorhergehenden Ansprüche,
wobei Bezugsvolumina (26a, 26b) aktivierbar sind und vorausberechnete Abstände zu mindestens einer Kombination parallel aktiver Bezugsvolumina (26a, 26b) aus vorausberechneten Abständen je Bezugsvolumen (26a, 26b) zusammengestellt sind, wobei insbesondere die Steuer- und Auswertungseinheit (24) dafür ausgebildet ist, auf eine andere Kombination aktiver Bezugsvolumina (26a, 26b) umzuschalten.

13. 3D-Sensor (10) nach einem der vorhergehenden Ansprüche,
wobei in dem Speicher zu einem vorausberechneten Abstand eine Zusatzinformation gespeichert ist, die den Abstand oder den Bezugspunkt, zu dem der Abstand besteht, weiter charakterisiert und/oder wobei zumindest einige der vorausberechneten Abstände relativ zu anderen vorausberechneten Abständen gespeichert sind.

14. Verfahren zum Überwachen eines Überwachungsbereichs (12), wobei zur optischen 3D-Überwachung aus Empfangslicht aus dem Überwachungsbereich (12) ein Empfangssignal erzeugt und ausgewertet wird, um Objekte (28) in dem Überwachungsbereich (12) zu erfassen und den kürzesten Abstand der erfassten Objekte (28) zu mindestens einem Bezugsvolumen (26a, 26b) zu bestimmen,
**dadurch gekennzeichnet,**
**dass** für die Bestimmung des jeweiligen kürzesten Abstands eines erfassten Objekts (28) mindestens ein vorausberechneter Abstand zu dem Bezugsvolumen (26a, 26b) aus einem Speicher gelesen wird.
